# EUROPÄISCHE PATENTANMELDUNG

(11) **EP 1 961 995 A2**
(43) Veröffentlichungstag der Anmeldung: **27.08.2008**
(21) Anmeldenummer: 08002326.0
(22) Anmeldetag: 08.02.2008
(51) Int. Cl.: F16H 25/22

(54) **Vorrichtung zur Umwandlung einer Drehbewegung in eine Axialbewegung**

(30) Priorität: 24.02.2007 DE 102007009122
(71) Anmelder: Wilhelm Narr GmbH & Co. KG, 73230 Kirchheim/Teck (DE)
(72) Erfinder: Bauer, Frank, 73230 Kirchheim/Teck (DE); Beck, Siegfried, 70567 Stuttgart (DE); Herrmann, Matthias, 73230 Kirchheim/Teck (DE); Langbein, Klaus, 73235 Weilheim/Teck (DE); Langbein, Ulrich, 73230 Kirchheim/Teck (DE); Mack, Marion, 73230 Kirchheim/Teck (DE); Siegler, Peter, 73230 Kirchheim/Teck (DE); Viscio, Michele, 73730 Esslingen (DE); Weber, Matthias, 73230 Kirchheim/Teck (DE)
(74) Vertreter: Ruckh, Rainer Gerhard

(57) **Zusammenfassung**

Die Erfindung betrifft eine Vorrichtung (1) zur Umwandlung einer Drehbewegung in eine Axialbewegung oder umgekehrt. Die Vorrichtung (1) weist eine eine Außenprofilierung (3) aufweisende Spindel (2) sowie eine die Spindel (2) umgebende und relativ zu dieser drehbare, eine Innenprofilierung (5) aufweisende Mutter (4) auf. Dazwischen sind Wälzkörper (6) angeordnet, welche zwei unterschiedliche Profilierungen (6a, 6b) aufweisen, von welchen die eine einen axialen Kraftschluss zur Außenprofilierung (3) der Spindel (2) und die andere einen axialen Kraftschluss zur Innenprofilierung (5) der Mutter (4) herstellt. Die Wälzkörper (6) sind mehrteilig ausgebildet.

## Beschreibung

Die Erfindung betrifft eine Vorrichtung gemäß dem Oberbegriff des Anspruchs 1.

Eine derartige Vorrichtung ist aus der DE 37 39 059 A1 bekannt. Diese Vorrichtung dient zur Umwandlung einer Drehbewegung in eine Axialbewegung oder umgekehrt. Als wesentliche Komponenten umfasst die Vorrichtung eine eine Außenprofilierung aufweisende Spindel, eine die Spindel umgebende und relativ zu dieser drehbare, eine Innenprofilierung aufweisende Mutter und dazwischen angeordnete Wälzkörper, welche unterschiedliche Profilierungen aufweisen, von welchen die eine einen axialen Kraftschluss mit der Außenprofilierung der Spindel und die andere einen axialen Kraftschluss mit der Mutter herstellt.

Die so ausgebildete Vorrichtung bildet einen Gewindetrieb, welchem ein Elektroantrieb zugeordnet sein kann, dessen Drehbewegung durch den Gewindetrieb in eine langsame Axialbewegung umgesetzt wird.

Hierbei wälzen die Wälzkörper, die endseitig in Abstandsscheiben drehbar gelagert sind, mit einer bestimmten Umlaufgeschwindigkeit auf dem die Außenprofilierung aufweisenden Mantel der Spindel um. Dabei sind die ersten Profilierungen der Wälzkörper in der Außenprofilierung der Spindel geführt. Die Profilierungen der über den Umfang der Spindel verteilten, vorzugsweise an äquidistanten Winkelscheiben zueinander liegenden Wälzkörper weisen einen axialen Versatz auf.

Der axiale Versatz der Profilierungen der einzelnen Wälzkörper leitet sich von der Steigung der Außenprofilierung der Spindel ab. Dadurch bilden die Wälzkörper in ihrer Gesamtheit ein Gewinde für die Spindel. Das Gewinde ist damit nicht von der Innenprofilierung der Mutter gebildet. In dieser Innenprofilierung laufen vielmehr die zweiten Profilierungen der Walzkörper.

Bei der so ausgebildeten Vorrichtung laufen die Wälzkörper entsprechend dem Käfig eines Kugellagers um. Diese Bewegung ist langsamer als die Drehbewegung der Spindel. Erst nach einem vollständigen Umlauf der Wälzkörper hat sich die Spindel um den Betrag der Steigung deren Außenprofilierung in axialer Richtung verschoben. Die effektive Steigung der Vorrichtung ist somit kleiner als die Steigung der Außenprofilierung der Spindel.

Die Wälzkörper von Vorrichtungen dieser Art sind einstückig ausgebildet. Die Profilierungen an den Mantelflächen der Wälzkörper werden mittels Schleifscheiben eingeschliffen. Die Schleifscheiben sind bevorzugt an die Längen der Wälzkörper angepasst, so dass die jeweilige Schleifscheibe nur einmal am Wälzkörper angesetzt und in dessen Mantelfläche eingestochen wird. Problematisch ist jedoch die Bearbeitung von Wälzkörpern größerer Längen. Da Schleifscheiben oft nicht in der entsprechenden Größe verfügbar sind, muss die Schleifscheibe mehrmals versetzt am Wälzkörper angeordnet und in dessen Mantelfläche eingestochen werden. Dadurch bedingt besteht die Gefahr des Auftretens von Versatzfehlem in den Profilierungen, wodurch die Funktion der Wälzkörper erheblich beeinträchtigt wird. Weiterhin besteht ein Problem darin, dass bei größeren Schleifscheiben der Schleifdruck den diese ausüben, größer wird, wodurch eine gleichmäßige Bearbeitung der Wälzkörper erschwert ist.

Der Erfindung liegt die Aufgabe zugrunde, eine Vorrichtung der eingangs genannten Art bereitzustellen, welche auch bei großen Abmessungen exakt und reproduzierbar gefertigt werden kann.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße Vorrichtung dient zur Umwandlung einer Drehbewegung in eine Axialbewegung oder umgekehrt. Die Vorrichtung weist eine eine Außenprofilierung aufweisende Spindel sowie eine die Spindel umgebende und relativ zu dieser drehbare, eine Innenprofilierung aufweisende Mutter auf. Dazwischen sind Wälzkörper angeordnet, welche zwei unterschiedliche Profilierungen aufweisen, von welchen die eine einen axialen Kraftschluss zur Außenprofilierung der Spindel und die andere einen axialen Kraftschluss zur Innenprofilierung der Mutter herstellt. Die Wälzkörper sind mehrteilig ausgebildet.

Die mehrteilige Ausbildung der Wälzkörper ist so beschaffen, dass ein Wälzkörper wenigstens zwei Wälzkörperteile aufweist, wobei auf jedem der Wälzkörperteile ein Teil der Profilierungen des Wälzkörpers vorgesehen ist.

Die einzelnen Wälzkörperteile eines Wälzkörpers sind dabei in axialer Richtung hintereinander angeordnet und bevorzugt auf einer gemeinsamen Welle als weiterer Komponente des Wälzkörpers geführt. Hierzu weisen die Wälzkörperteile in axialer Richtung verlaufende Bohrungen auf, in welchen die Welle geführt ist.

Damit wird als wesentlicher Vorteil der Erfindung erhalten, dass die die Profilierungen aufweisenden Einheiten nicht mehr vom Wälzkörper als Gesamteinheit sondern von den Wälzkörperteilen als segmentierten Einheiten gebildet sind. Die Anzahl sowie die Größen der Wälzkörperteile können nun so an die Größen der zur Verfügung stehenden Schleifscheiben angepasst werden, dass mit einer Schleifscheibe in einem Arbeitsgang, das heißt mit einmaligem Einstechen der Schleifscheibe in die Mantelfläche der Wälzkörperteile, die Profilierungen eingearbeitet werden können. Damit können Versatzfehler in den Profilierungen der Wälzkörperteile vermieden werden. Die aus den Wälzkörperteilen zusammengesetzten Wälzkörper können somit fehlerfrei und reproduzierbar gefertigt werden. Da die Schleifscheiben zur Bearbeitung der Wälzkörperteile eine geringe Länge aufweisen können, ist auch der von den Schleifscheiben generierte Schleifdruck entsprechend gering, wodurch die Bearbeitungsqualität erheblich erhöht wird.

Vorteilhaft sind die Wälzkörperteile eines Wälzkörpers identisch ausgebildet, so dass diese in identischer Weise bearbeitet werden können.

Die die Wälzkörperteile aufnehmende Welle eines Wälzkörpers ist mit ihren längsseitigen Enden jeweils in einer Abstandsscheibe gelagert. Um die Drehbarkeit der Wälzkörper zu gewährleisten, können die Wellen drehbar in den Abstandsscheiben gelagert sein. Alternativ ist prinzipiell auch eine starre Ankopplung der Wellen an die Abstandsscheibe denkbar, wenn die Welle mit hinreichendem Spiel in den Bohrungen der Wälzkörperteile geführt ist, so dass sich die Wälzkörperteile ungehindert relativ zur Welle drehen können.

In einer konstruktiv besonders einfachen Ausgestaltung der Erfindung ist die Welle eines Wälzkörpers unmittelbar in den Bohrungen der Wälzkörperteile mit vorzugsweise geringem Spiel geführt.

Bei der Fertigung der aus metallischen Werkstoffen, vorzugsweise Stahl, bestehenden Wälzkörperteilen müssen die Bohrungen vor dem Härten der Wälzkörperteile in diese eingearbeitet werden. Während des nachfolgenden Härtens kann es zu Verzügen der Wälzkörperteile kommen, was insbesondere zu Abweichungen des Durchmessers der Bohrungen von ihren Sollwerten führen kann. Durch eine Variation der Durchmesser der Bohrungen kann die Führung des Wälzkörpers auf der Welle beeinträchtigt sein.

Um derartige Schwierigkeiten zu vermeiden, werden als Führungen auf der Welle über die längsseitigen Enden eines Wälzkörperteils Gleitbuchsen in die Bohrungen eingeführt und eingepresst. Diese vorzugsweise aus Kunststoff bestehenden Gleitbuchsen bilden definierte und reproduzierbar herstellbare Führungen auf der Welle, wobei die Gleitbuchsen bevorzugt mit geringem Spiel auf der Welle geführt sind.

In einer besonders vorteilhaften Weiterbildung der Erfindung sind zwischen den aneinander angrenzenden längsseitigen Enden der Wälzkörperteile eines Wälzkörpers Federn, vorzugsweise zwei stirnseitig aneinander liegende Tellerfedern, vorgesehen. Durch die von den Federn ausgeübten Federkräfte werden die auf der Welle geführten Wälzkörperteile auseinander gedrückt. Da die Profilierungen der Wälzkörperteile ebenso wie die Innenprofilierung der Mutter und die Außenprofilierung der Spindel schräge Flanken aufweisen, werden durch die wirkenden Federkräfte die Profilierungen der Wälzkörperteile gegen die Innenprofilierungen der Mutter und gegen die Außenprofilierung der Spindel gedrückt, so dass zwischen diesen Komponenten ein spielfreier Kontakt besteht. Somit wird durch die Tellerfedern auf konstruktiv sehr einfache Weise bewirkt, dass die Profilierungen der Wälzkörper spielfrei in der Innenprofilierung der Mutter und der Außenprofilierung der Spindel anliegen. Damit wird auch bei Abwesenheit von externen, in axialer Richtung wirkenden äußeren Kräften, das heißt im Leerlauf des Gewindetriebs oder bei Lastwechseln, eine spielfreie Führung der Profilierungen in den Außenprofilierungen der Mutter erzielt. Dies ist deshalb wichtig, da bei vorhandenem Spiel zwischen den vorgenannten Komponenten die Gefahr bestünde, dass ein Wälzkörper beim Betrieb der Vorrichtung stehen bleiben würde.

Die Erfindung wird im Nachstehenden anhand der Zeichnungen erläutert. Es zeigen:
- Figur 1:: Erstes Ausführungsbeispiel einer erfindungsgemäßen Vorrichtung zur Umwandlung einer Drehbewegung in eine Axialbewegung.
- Figur 2:: Zweites Ausführungsbeispiel einer erfindungsgemäßen Vorrichtung zur Umwandlung einer Drehbewegung in eine Axialbewegung.
- Figur 3:: Vergrößerte Darstellung eines Ausschnitts der Vorrichtung gemäß Figur 2.

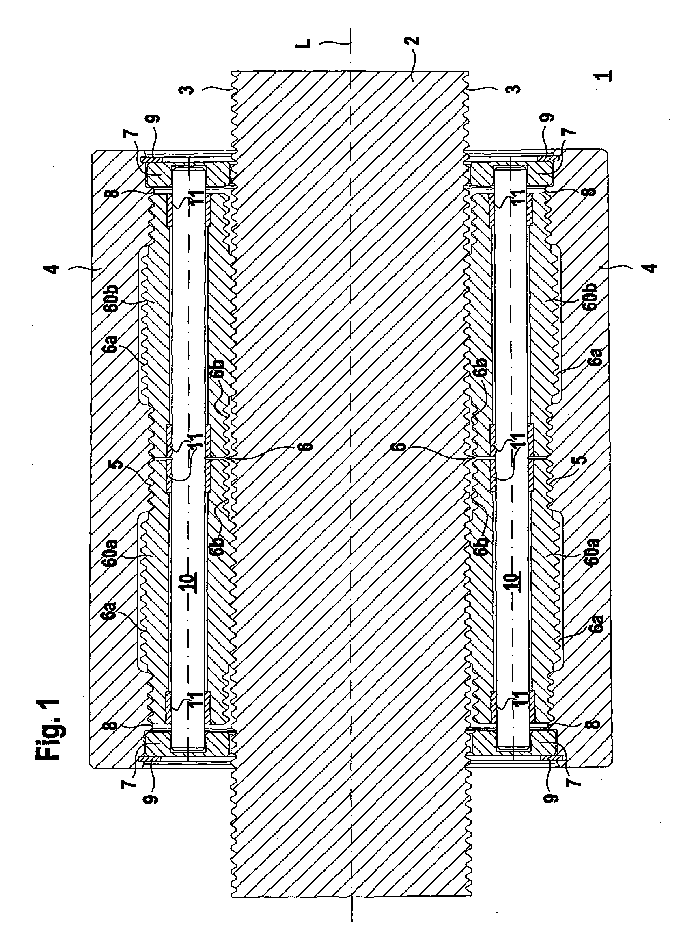

Figur 1 zeigt in einem Längsschnitt ein erstes Ausführungsbeispiel einer Vorrichtung 1 zur Umwandlung einer Drehbewegung in eine Axialbewegung oder umgekehrt. Die mit einem nicht gesondert dargestellten Elektromotor angetriebene Vorrichtung 1 bildet einen Gewindetrieb und umfasst eine Spindel 2, die an ihrer Mantelfläche eine Außenprofilierung 3 in Form von Rillen aufweist. Die Spindel 2 bildet somit eine Gewindespindel und kann die Welle des Elektromotors bilden. Die Spindel 2 ist von einer Mutter 4 umgeben, wobei die Mutter 4 gegenüber der Spindel 2 drehbar ist. An der Innenseite der Mutter 4 ist eine Innenprofilierung 5 in Form von Rillen vorgesehen.

Zwischen der hohlzylindrischen Mutter 4 und der Spindel 2 ist eine vorgegebene Anzahl von Wälzkörpern 6 vorgesehen. Die Wälzkörper 6 sind in äquidistanten Winkeldistanzen in Umfangsrichtung der Spindel 2 versetzt angeordnet, wobei die Längsachsen der Wälzkörper 6 parallel zur Längsachse L der Spindel 2 verlaufen. Die längsseitigen Enden der Wälzkörper 6 sind jeweils in einer Abstandsscheibe 7 gelagert. Die Wälzkörper 6 weisen jeweils eine erste Profilierung 6a und eine zweite Profilierung 6b auf. Mit der ersten Profilierung 6a wird ein axialer Kraftschluss des Wälzkörpers 6 mit der Spindel 2 hergestellt indem diese Profilierung 6a in der Außenprofilierung 3 der Spindel 2 geführt ist. Mit der zweiten Profilierung 6b wird ein axialer Kraftschluss des Wälzkörpers 6 mit der Mutter 4 hergestellt, indem diese Profilierung 6b in der Innenprofilierung 5 der Mutter 4 geführt ist.

Die die längsseitigen Enden der Wälzkörper 6 aufnehmenden Abstandsscheiben 7 dienen als Abstandshalter für die Wälzkörper 6. Die identisch ausgebildeten Abstandsscheiben 7 weisen eine kreisscheibenförmige Form auf. In der Mitte jeder Abstandsscheibe 7 ist eine zentrale Bohrung vorgesehen, durch welche die Spindel 2 geführt ist. Dabei liegen die Abstandsscheiben 7 in Abstand zur Spindel 2. Weiterhin weisen die Abstandsscheiben 7 Sacklochbohrungen auf, in welchen die längsseitigen Enden der Wälzkörper 6 gelagert sind.

Die Profilierungen 6a der einzelnen Wälzkörper 6 sind versetzt zueinander. Dabei weist die Profilierung 6a jedes Wälzkörpers 6 zu dem vorigen Wälzkörper 6 einen definierten axialen Versatz auf. Die versetzten Profilierungsstrukturen der Wälzkörper 6 bilden ein Gewinde für die Außenprofilierung 3 der Spindel 2. Bei einer Drehbewegung der Spindel 2 relativ zur Mutter 4 wälzen die Wälzkörper 6 mit den Profilierungen 6a auf der Außenprofilierung 3 ab, wobei zugleich die zweiten Profilierungen 6b in der Innenprofilierung 5 der Mutter 4 geführt sind. Bei stehender Mutter 4 und sich drehender Spindel 2 laufen die in den Abstandsscheiben 7a, 7b gelagerten Wälzkörper 6 auf der Mantelfläche der Spindel 2 um, wobei diese Bewegung langsamer ist als die Drehbewegung der Spindel 2. Die Drehbewegungen erfolgen derart, dass sich erst nach einem vollständigen Umlauf der Wälzkörper 6 die Spindel 2 um den Betrag der Steigung der Außenprofilierung 3 axial verschoben hat.

Während des Betriebs der Vorrichtung 1 müssen die Abstandsscheiben 7 in axialer Richtung, d. h. in Richtung der Längsachse L relativ zur Mutter 4 lagefixiert sein, damit die Abstandsscheiben 7 ihre Funktion als Drehlagerung für die Wälzkörper 6 übernehmen können. Bei der Vorrichtung 1 gemäß Figur 1 sind zur Axialfixierung der Abstandsscheiben 7 an der Innenkontur der Mutter 4 Absätze 8 vorgesehen. Die so gelagerten Abstandsscheiben 7 werden dann jeweils durch einen Sprengring 9 lagegesichert. Zur Aufnahme eines Sprengrings 9 ist jeweils eine Nut in die Innenkontur der Mutter 4 eingearbeitet.

Die Wälzkörper 6 der Vorrichtung 1 gemäß Figur 1 sind mehrteilig ausgebildet. Dabei weist jeder Wälzkörper 6 zwei identisch ausgebildete Wälzkörperteile 60a, 60b auf, die auf einer Welle 10 als weiterer Komponente des Wälzkörpers 6 geführt sind.

Jedes Wälzkörperteil 60a, 60b weist eine in axialer Richtung verlaufende Bohrung auf, in welcher die Welle 10 geführt ist. Prinzipiell kann die vorzugsweise aus Stahl bestehende Welle 10 unmittelbar in den Bohrungen der Wälzkörperteile 60a, 60b geführt sein, wobei ein geringes Spiel zwischen den Wänden der Bohrung und den Mantelflächen der Welle 10 vorgesehen ist, so dass die Wälzkörperteile 60a, 60b relativ zur Welle 10 drehbar sind. Da jedoch bei der Fertigung der Wälzkörperteile 60a, 60b zunächst die Bohrungen eingearbeitet werden und dann die vorzugsweise aus Stahl bestehenden Wälzkörperteile 60a, 60b gehärtet werden, können durch das Härten Verzüge auftreten, die zu Schwankungen der Durchmesser der Bohrungen führen können, so dass eine definierte Führung der Wälzkörperteile 60a, 60b auf der Welle 10 nicht mehr gewährleistet ist. Um eine solche definierte Führung zu erreichen, werden über die längsseitigen Enden der Wälzkörperteile 60a, 60b Gleitbuchsen 11 in die Bohrungen eingeführt und dort eingepresst. Die Gleitbuchsen 11 sind identisch ausgebildet und bestehen vorzugsweise aus Kunststoff. Zur Aufnahme der Gleitbuchsen 11 ist der Durchmesser der Bohrung eines Wälzkörperteils 60a im Bereich der längsseitigen Enden gegenüber dem zentralen Bereich der Bohrung, wie aus Figur 1 ersichtlich, etwas verbreitert. Um die Drehbarkeit der Wälzkörperteile 60a, 60b zur Welle 10 zu gewährleisten, sind die Gleitbuchsen 11 so dimensioniert, dass diese mit geringem Spiel auf der Welle 10 geführt sind.

Die längsseitigen Enden der Welle 10 eines Wälzkörpers 6 sind in den Sacklochbohrungen der Abstandsscheibe 7 gelagert. Die Enden der Wellen 10 können drehbar in den Sacklochbohrungen der Abstandsscheiben 7 gelagert sein. Alternativ können die Wellenenden fest mit den Abstandsscheiben 7 verbunden sein. Voraussetzung hierfür ist, eine gute Drehbarkeit der Wälzkörperteile 60a, 60b auf der Welle 10.

In die Mantelflächen der Wälzkörperteile 60a, 60b sind die Profilierungen 6a, 6b eingearbeitet. Die Einarbeitung der Profilierungen 6a, 6b erfolgt durch Schleifscheiben. Die Anzahl und Größen der Wälzkörperteile 60a, 60b, in welche ein Wälzkörper 6 unterteilt ist, sind so gewählt und an die Größe der Schleifscheibe angepasst, dass die Profilierungen 6a, 6b in einem Arbeitsgang und damit nur durch einmaliges Einstechen der Schleifscheibe in das jeweilige Wälzkörperteil 60a, 60b hergestellt werden. Dadurch werden Versätze in den Profilierungen 6a, 6b vermieden.

Im vorliegenden Fall weist jeder Wälzkörper 6 zwei identisch ausgebildete Wälzkörperteile 60a, 60b auf. Dabei ist im zentralen Bereich jedes Wälzkörperteils 60a, 60b ein Segment der ersten Profilierung 6a vorgesehen. Im Bereich der längsseitigen Enden der Wälzkörperteile 60a, 60b, deren Außendurchmesser kleiner als der Außendurchmesser des zentralen Bereichs sind, sind Segmente der zweiten Profilierung 6b vorgesehen.

Bei der Ausführungsform gemäß Figur 1 grenzen die Wälzkörperteile 60a, 60b mit ihren längsseitigen Enden direkt aneinander an, so dass sich die Profilierung 6b an diesen Enden zu einer kontinuierlichen, durchgehenden Struktur ergänzen.

Durch den Eingriff der Profilierungen 6a in die Außenprofilierung 3 der Spindel 2 sind die beiden Wälzkörperteile 60a, 60b in axialer Richtung relativ zueinander lagefixiert.

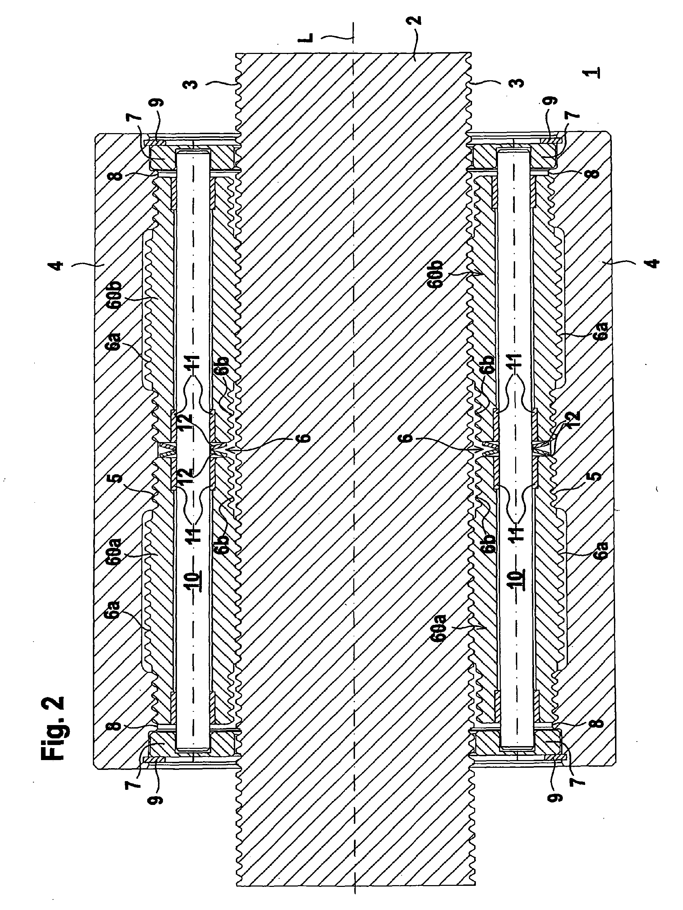

Figur 2 zeigt ein zweites Ausführungsbeispiel einer Vorrichtung 1 zur Umwandlung einer Drehbewegung in eine Axialbewegung. Der Aufbau der in Figur 2 dargestellten Vorrichtung 1 entspricht im Wesentlichen der Vorrichtung 1 gemäß Figur 1. Insbesondere weist auch die Vorrichtung 1 gemäß Figur 1 mehrteilig ausgebildete Wälzkörper 6, bestehend aus zwei identischen Wälzkörperteilen 60a, 60b, die auf einer Welle 10 geführt sind, auf. In weiterer Übereinstimmung mit der Ausführungsform gemäß Figur 1 sind auch bei der Vorrichtung 1 gemäß Figur 2 Wälzkörperteile 60a, 60b mit axialen Bohrungen vorgesehen, wobei in deren längsseitige Enden Gleitbuchsen 11 zur Führung auf der Welle 10 eingepresst sind. Auch die Ausbildung der Profilierungen 6a, 6b an den einzelnen Wälzkörperteilen 60a, 60b entspricht der Ausführungsform gemäß Figur 1.

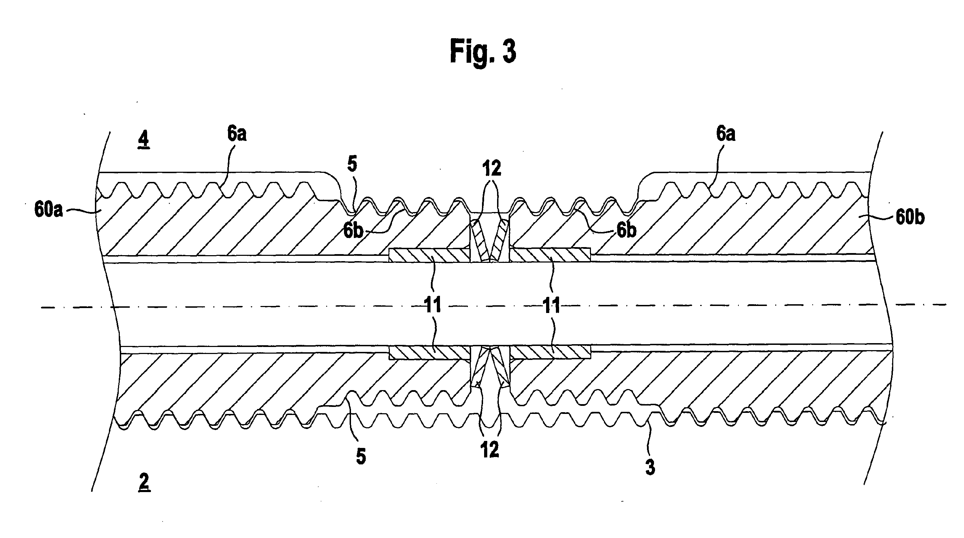

Im Unterschied zur Ausführungsform gemäß Figur 1 grenzen bei der Vorrichtung 1 gemäß Figur 2 die längsseitigen Enden der Wälzkörperteile 60a, 60b eines Wälzkörpers 6 nicht unmittelbar aneinander an, sondern liegen in Abstand zueinander. Im Zwischenraum zwischen den längsseitigen Enden der Wälzkörperteile 60a, 60b sind zwei identisch ausgebildete Tellerfedern 12 angeordnet. Ein Ausschnitt des Bereichs zweier angrenzender Wälzkörperteile 60a, b ist in Figur 3 vergrößert dargestellt.

Die Tellerfedern 12 liegen mit ihren rückseitigen Stirnseiten aneinander und drücken mit ihren vorderen Stirnseiten gegen jeweils eine Stirnfläche an einem längsseitigen Ende eines Wälzkörperteils 60a, 60b. Die Federkräfte der Tellerfedern 12 wirken in axialer Richtung der Wälzkörperteile 60a, 60b und drücken diese auseinander. Da die erste Profilierungen 6a der Wälzkörperteile 60a, 60b in den Außenprofilierungen 3 der Spindel geführt und so lagefixiert sind, können diese jedoch den Federkräften nicht beliebig ausweichen. Wie aus Figur 3 ersichtlich, werden durch die Federkräfte der Tellerfedern 12 die Wälzkörperteile 60a, b so auseinandergedrückt, dass jeweils nur die linken Flanken der Profilierungen 6b des Wälzkörperteils 60a an den linken Flanken der Innenprofilierungen 5 der Mutter 4 anliegen. Entsprechend liegen jeweils nur die rechten Flanken der Profilierungen 6b des Wälzkörperteils 60b an den rechten Flanken der Innenprofilierungen 5 der Mutter 4 an. So bewirken die Federkräfte der Tellerfedern 12, dass die Wälzkörperteile 60a, 60b spielfrei in der Mutter 4 geführt sind. Ebenso bewirken die Federkräfte der Tellerfedern 12, wie in Figur 3 dargestellt, dass jeweils nur die linken Flanken der Profilierungen 6a des Wälzkörperteils 60a gegen die linken Flanken der Außenprofilierung 3 der Spindel 2 gedrückt werden. Entsprechend werden durch die Federkräfte der Tellerfedern 12 jeweils nur die rechten Flanken der Profilierungen 6a des Wälzkörperteils 60b gegen die rechten Flanken der Außenprofilierung 3 der Spindel 2 gedrückt. Damit wird durch die von den Tellerfedern 12 ausgeübten Federkräfte erreicht, dass die Wälzkörperteile 60a, 60b mit ihren Profilierungen 6a, 6b einerseits spielfrei in der Innenprofilierung 5 der Mutter 4 und andererseits spielfrei in der Außenprofilierung 3 der Spindel 2 geführt werden. Dadurch wird gerade auch bei Abwesenheit äußerer, in axialer Richtung wirkender externer Kräfte, das heißt im Leerlauf des Gewindetriebs oder bei Lastwechseln des Gewindetriebs eine spielfreie Führung der Wälzkörperteile 60a, 60b in der Mutter 4 und von der Spindel 2 erzielt, wodurch ein unerwünschtes Stehenbleiben der Wälzkörper in derartigen Situationen vermieden wird. Bei vorhandener externer Last ist eine derartige Sicherung generell nicht nötig, da dort die in axialer Richtung wirkenden Kräfte für eine spielfreie Führung der Wälzkörper sorgen.

### Bezugszeichenliste

- (1): Vorrichtung
- (2): Spindel
- (3): Außenprofilierung
- (4): Mutter
- (4a): Grundkörper
- (4b): Ansatz
- (5): Innenprofilierung
- (6): Wälzkörper
- (60a): Wälzkörperteil
- (60b): Wälzkörperteil
- (6a): erste Profilierung
- (6b): zweite Profilierung
- (7): Abstandsscheibe
- (8): Absatz
- (9): Sprengring
- (10): Welle
- (11): Gleitbuchse
- (12): Tellerfeder

- (L): Längsachse

## Patentansprüche

1. Vorrichtung (1) zur Umwandlung einer Drehbewegung in eine Axialbewegung oder umgekehrt, mit einer eine Außenprofilierung (3) aufweisenden Spindel (2), mit einer die Spindel (2) umgebenden und relativ zu dieser drehbaren, eine Innenprofilierung (5) aufweisenden Mutter (4), mit dazwischen angeordneten Wälzkörpern (6), welche zwei unterschiedliche Profilierungen (6a, 6b) aufweisen, von welchen die eine einen axialen Kraftschluss zur Außenprofilierung der Spindel (2) und die andere einen axialen Kraftschluss zur Innenprofilierung der Mutter (4) herstellt, **dadurch gekennzeichnet, dass** die Wälzkörper (6) mehrteilig ausgebildet sind.

2. Vorrichtung nach Anspruch 1, **dadurch gekennzeichnet, dass** jeder Wälzkörper (6) zwei auf einer Welle (10) geführte Wälzkörperteile (60a, 60b) aufweist.

3. Vorrichtung nach Anspruch 2, **dadurch gekennzeichnet, dass** auf den Mantelflächen der Wälzkörperteile (60a, 60b) die Profilierungen (6a, 6b) vorgesehen sind.

4. Vorrichtung nach einem der Ansprüche 2 oder 3, **dadurch gekennzeichnet, dass** die längsseitigen Enden der Welle (10) eines Wälzkörpers (6) in Abstandsscheiben (7) gelagert sind.

5. Vorrichtung nach einem der Ansprüche 2 bis 4, **dadurch gekennzeichnet, dass** jedes Wälzkörperteil (60a, 60b) eines Wälzkörpers (6) eine in axialer Richtung verlaufende Bohrung aufweist, in welcher die Welle (10) geführt ist.

6. Vorrichtung nach Anspruch 5, **dadurch gekennzeichnet, dass** die Welle (10) mit geringem Spiel in den Bohrungen geführt ist.

7. Vorrichtung nach Anspruch 5, **dadurch gekennzeichnet, dass** über beide längsseitige Enden eines Wälzkörperteils (60a, 60b) jeweils eine Gleitbuchse (11) in die Bohrung einführbar und in diese einpressbar ist.

8. Vorrichtung nach Anspruch 7, **dadurch gekennzeichnet, dass** zur Aufnahme der Gleitbuchsen (11) der Innendurchmesser der Bohrung eines Wälzkörperteils (60a, 60b) im Bereich der längsseitigen Enden gegenüber dem zentralen Bereich der Bohrung vergrößert ist.

9. Vorrichtung nach einem der Ansprüche 7 oder 8, **dadurch gekennzeichnet, dass** die Welle (10) mit geringem Spiel in den Gleitbuchsen (11) geführt ist.

10. Vorrichtung nach einem der Ansprüche 2 bis 9, **dadurch gekennzeichnet, dass** zwischen den aneinander angrenzenden längsseitigen Enden der Wälzkörperteile (60a, 60b) eines Wälzkörpers (6) Federn vorgesehen sind.

11. Vorrichtung nach Anspruch 10, **dadurch gekennzeichnet, dass** zwischen den aneinander angrenzenden längsseitigen Enden der Wälzkörperteile (60a, 60b) eines Wälzkörpers (6) zwei stirnseitig aneinander angrenzende Tellerfedern (12) vorgesehen sind.

12. Vorrichtung nach einem der Ansprüche 2 bis 11, **dadurch gekennzeichnet, dass** die Wälzkörperteile (60a, 60b) eines Wälzkörpers (6) identisch ausgebildet sind.
